# EUROPEAN PATENT SPECIFICATION

(11) **EP 3 590 768 B1**
(45) Date of publication and mention of the grant of the patent: **18.05.2022**
(21) Application number: 18181116.7
(22) Date of filing: 02.07.2018
(51) Int. Cl.: B60R 16/02, B60R 16/027, B60R 21/01

(54) **SUPPORTING MEMBER TO SUPPORT A CABLING, VEHICLE STEERING WHEEL WHICH IS PROVIDED WITH SUCH SUPPORTING MEMBER, AND ASSEMBLY METHOD TO ASSEMBLE SUCH VEHICLE STEERING WHEEL**
TRÄGERELEMENT ZUM TRAGEN EINER VERKABELUNG, FAHRZEUGLENKRAD, DAS MIT SOLCH EINEM TRÄGERELEMENT VERSEHEN IST, UND MONTAGEVERFAHREN ZUM MONTIEREN SOLCH EINES FAHRZEUGLENKRADS
ÉLÉMENT DE SUPPORT POUR SUPPORTER UN CÂBLAGE, VOLANT DE DIRECTION DE VÉHICULE ÉQUIPÉE D'UN TEL ÉLÉMENT DE SUPPORT ET PROCÉDÉ D'ASSEMBLAGE POUR ASSEMBLER UN TEL VOLANT DE DIRECTION DE VÉHICULE

(43) Date of publication of application: 08.01.2020
(73) Proprietor: FCA Italy S.p.A., 10135 Torino (IT)
(72) Inventor: BROGNARA, Andrea, 10135 TORINO (IT); GUERRA, Claudio, 10135 TORINO (IT); DICANOSA, Claudio Pierluigi, 10135 TORINO (IT); CAMPUS, Antonello, 10135 TORINO (IT); LEOMANNI, Nicola, 10135 TORINO (IT)
(74) Representative: Lovino, Paolo

(56) References cited:
- WO-A1-2017/093313
- US-A1- 2017 138 379

## Description

This invention relates to a supporting member to support a cabling during the assembly operations of a vehicle steering wheel.

As is known, the vehicle steering wheels are mounted on a steering column over a driving switch device and generally include a rotating structure provided with a hub fitted onto such column in fixed angular position. Moreover, the steering wheels include an airbag module, that is mounted over the hub, in related fixed position, so as to cover an end of the column. The airbag module comprises an airbag device and, normally, a pressurised control element which can be actuated by the driver to activate an external audible warning device (hooter). The airbag module devices receive electrical supply and/or electrical controls through cables that are electrically connected to the driving switch device. Such cabling must have such a length and/or arrangement to enable the steering wheel to freely rotate together with the steering column, with respect to the driving switch device, but at the same time it must have a relatively contained bulkiness, especially not to obstruct the airbag module coupling with the underlying column.

In the known solutions, such cabling is carried by the driving switch device and projects through an opening of the steering wheel hub, so that it may be handled by an operator during the airbag module assembly. Indeed, the airbag module is mounted to a reinforcement of the steering wheel only after having coupled the hub to the steering column. In particular, the operator responsible for assembly firstly brings the airbag module closer to the hub, then connects the cabling and corresponding connectors provided with the airbag module and finally secures the latter to the hub.

As above-mentioned, the cabling has to have a minimum length that is sufficient to facilitate its connection to the airbag module connectors. On the other hand, the length of the cabling can lead to a setback, that is the risk of pinching the cabling itself between the airbag module and the underlying reinforcement of the steering wheel during the fixing of the airbag module. At the end of the assembly, it is generally impossible to carry out experimental tests to verify the actual functionality of the airbag device without making the latter explode, therefore there can be real uncertainty about such functionality if suitable precautions are not foreseen.

In order to try and solve such a problem, it is known to foresee a driving element in plastic material defining a channel where the above-mentioned cabling passes, so as to protect it from pinching during assembly operations. However, such driving elements are relatively rigid, hence they have a tendency to interfere with the operator when the latter has to handle the cabling in order to connect it to the airbag module.

For example, WO2017/093313A1 discloses a known driving element including retaining means for one or more cables, as well as a contact plug that is connectable to a coil spring on a steering column and to the driving element in a twist-proof manner.

The purpose of this invention is to make a supporting member to support a cabling, which enables to solve the above-mentioned problems simply and economically.

According to this invention a support member is made to support a cabling, as defined in claim 1.

Moreover, according to this invention, a vehicle steering wheel is provided and a method to assemble such steering wheel, as defined respectively in claims 9 and 10.

The invention will now be described with reference to the annexed drawings, that show a not limitative embodiment example, in which:
- Figure 1 shows, in perspective view, a preferred embodiment of the supporting member to support a cabling, according to this invention;
- Figure 2 is similar to Figure 1 and shows an assembly formed by the supporting member of Figure 1 and by a cabling coupled to such supporting member; and
- Figure 3 shows, in rear perspective view, an airbag module, that forms part of a vehicle steering wheel and is provided with the assembly of Figure 2; and
- Figure 4 shows an assembly phase to couple the airbag module of Figure 3 to a remaining part of the steering wheel.

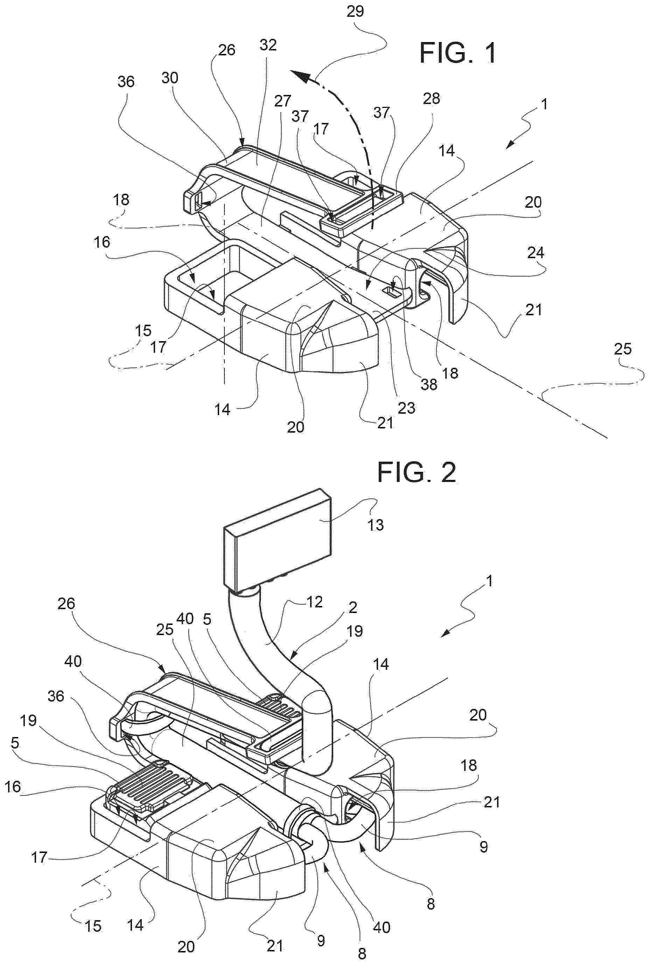

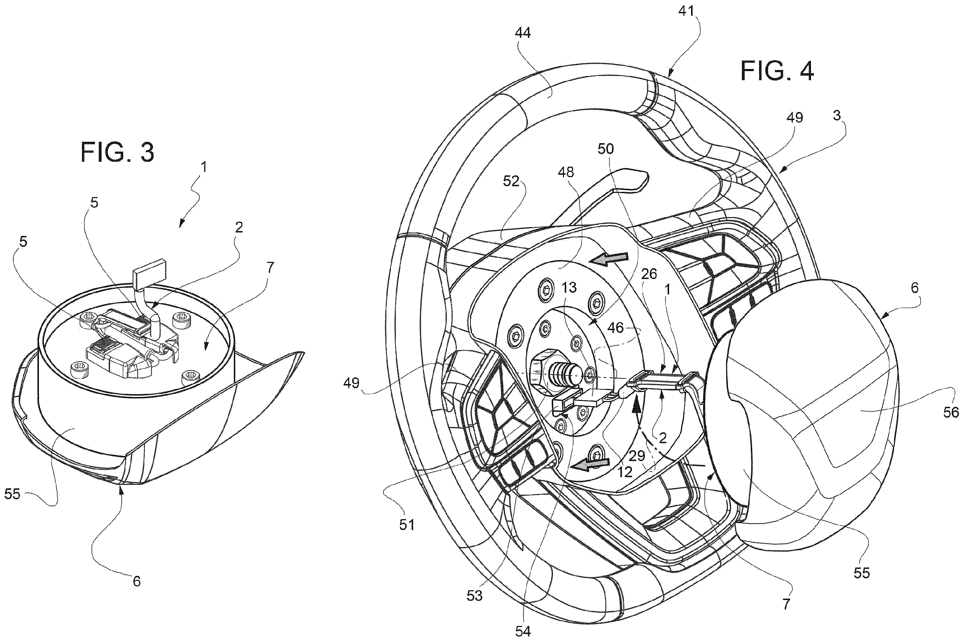

In Figure 1, reference number 1 shows a supporting member, able to support a cabling 2 (Figure 2), to facilitate the manual operations foreseen in order to assemble a vehicle steering wheel 3 (Figure 4), as will be better described below.

With reference to Figure 3, the cabling 2 comprises two electrical connectors 5 which can be electrically connected to an airbag module 6 being part of the steering wheel 3. In particular, the connectors 5 can be connected to respective electrical connection elements (not shown) provided at a rear face 7 of the airbag module 6. According to not shown variations, cabling 2 comprises a sole connector, or three connectors, instead of the two connectors 5. For the sake of simplicity, the connectors 5 have been shown with the same shapes and sizes, but this invention can also be applied to cabling provided with different connectors.

Moreover, with reference to Figure 2, the cabling 2 comprises two cables 8 comprising respective end stretches 9 that respectively extend starting from the connectors 5 and are spaced from each other. The cables 8 comprise respective streaches that are gathered together, and/or enfolded in a sheath, so as to form a single cable 12. The cables 8 then end in a single electrical connector 13, at the opposite end with respect to the connectors 5.

With reference to Figures 1 and 2, the supporting member 1 is in plastic material, possibly reinforced, for example reinforced by fibres sunk into the plastic material itself. Preferably, the supporting member 1 is defined as a single piece, made through a single moulding operation.

The supporting member 1 comprises at least an attachment portion 14 having the shape and size such as to be coupled in fixed position to at least one of the connectors 5. Preferably, for each connector 5, the supporting member 1 comprises a related attachment portion 14, and the attachment portions 14 are arranged in mutually flanked and/or aligned positions along a direction 15. In particular, the attachment portions 14 define respective seats 16 adapted to house at least a part of the connectors 5 in fixed positions. In order to ensure the fixing of the connectors 5, a snap-in coupling is provided or else an interference coupling in the seats 16, in an already known manner not described in detail.

Preferably, as shown in Figure 1, each seat 16 is formed by two areas 17 and 18, of which area 17 is open in a through manner along a direction 18 orthogonal to direction 15 and is engaged by an end 19 (Figure 2) of the corresponding connector 5, while area 18 is closed on a side by a half shell 20, in order to cover a rear part of the connector 5 from which the corresponding cable 8 exits. In particular, the stretches 9 of the cables 8 form a U-shaped bend and are partly covered by respective walls 21, that project from the half shells 20 and are curve shaped in order to follow at least part of such U-shaped bend.

Furthermore, the supporting member 1 comprises an intermediate wall 23 that connects the attachment portions 14 to each other. In particular, the wall 23 has a face 24 that is flat and is parallel to direction 15 and to a direction 25, orthogonal to directions 15 and 18.

As shown in Figure 2, preferably face 24 defines a support for a portion 25 of the cable 12.

Again with reference to Figure 1, according to this invention, the supporting member 1 comprises an arm 26 having two end portions 27, 28 opposite to each other. Portion 27 is fixed with respect to the attachment portions 14 and preferably extends starting from an end of wall 23 along direction 25. The arm 26 is elastically flexible, so as to enable a distancing of portion 28 from the attachment portions 14, along a movement direction 29 that, in the specific example, is arched about an axis of rotation parallel to direction 15. Nevertheless, with configurations different from arm 26, direction 29 could have a different orientation and/or curvature radii or may be essentially rectilinear.

The arm 26 comprises a looped portion (30) that is elastically deformable and defines a virtual hinge to allow portion 28 to rotate along direction 29. Usefully, in addition, arm 26 comprises a rectilinear portion 32, that defines a prolongation of the looped portion 30, has a flat shape and is essentially orthogonal to direction 29. In greater detail, the rectilinear portion 32 is joined up to portion 27 through the looped portion 30 and, on the opposite side, it ends with portion 28.

According to an aspect of this invention, the supporting member 1 comprises a retention device 35 to block the cable 12 coupled to the arm 26, and preferably also to the wall 23, during the elastic deformation. In the specific shown example, the retention device 35 comprises several holes through the supporting member 1 for the insertion of cable ties 40 (Figure 2), that are wrapped around the cable 12. To such purpose, in particular, the retention device 35 comprises a couple of holes 36 at the looped portion 30 and a couple of holes 37 at the end 28. Usefully, in addition the retention device 35 comprises a couple of holes 38 through the wall 23.

According to not shown variations, instead of holes for the cable ties 40, the retention device 35 comprises teeth, flaps, or similar flexible elements, that project from the arm 26 and possibly from face 24 for the snap-in coupling and blocking of the cable 12.

After having coupled the cabling 2 to the supporting member 1 so as to form a single assembly, shown in Figure 2, such an assembly is coupled to the airbag module 6, as already above-mentioned with reference to Figure 3.

As shown in Figure 4, besides the airbag module 6, the steering wheel 3 comprises a structure 41 having an annular element 44 that defines at least one holding portion able to be gripped by a driver to rotate the steering wheel 3 about an axis of rotation 46.

Moreover, the structure 41 has a hub 48, which is connected to the element 44 through one or more spokes 49, has a cavity 50 open frontally and is able to be coupled in the vehicle, in an already known way and not described in detail, in angularly fixed and coaxial position with respect to a steering column 51.

Prior to coupling the hub 48, a driving switch device 52 (partly and schematically shown) is arranged around the steering column 51 in fixed position. The driving switch device 52 carries a connector 53, adapted to be electrically connected to the connector 13 to transmit electrical supply and/or electrical signals to the airbag module 6 via the cabling 2. In particular, after the assembly of the structure 41 on the steering column 51, the connector 53 is arranged in an opening 54 obtained through the structure 41 of the steering wheel 3.

After the assembly of the structure 41, the airbag module 6 must be coupled to the hub 48 so as to close the cavity 50 and cover an axial end of the steering column 51. In particular, the airbag module 6 comprises an airbag device 55 and a pressurised control device 56 being operable by the driver to activate an external audible warning device (hooter).

During the assembly operations of the airbag module 6, the latter is supported (for example manually) so as to keep the rear face 7 in a position close to the hub 48, but at such a distance so as to be able to manually grasp the cable 12 and/or the arm 26 and to be able to, immediately after, bring closer and electrically connect the connector 13 to the connector 53. During this step, the arm 26 can be elastically deformed in a relatively simple way to bring closer the connector 13 to the hub 48. The traction on the arm 26 along the direction 29 transfers itself to the attachment portions 14 and, from the latter, to the connectors 5. The flexibility/rigidity of the arm 26 is determined during design so as to limit excessive elastic forces that may cause risks of electrical disconnection of the connectors 5 from the airbag module 6 and/or risks of uncoupling of the supporting member 1 from the connectors 5.

When the connectors 13 and 53 are connected to each other, the airbag module 6 is positioned so as to close the cavity 50 and is then fixed to the hub 48, according to a already known mode not described in detail. During the bringing closer of the rear face 7 to the hub 48, the arm 26 returns automatically to its undeformed state, shown in Figures 1 and 2, carrying with it the cable 12 to which it is attached. Thereby, cable 12 is not free, during the closing of cavity 50, but it is guided by the elastic force of the arm 26 along a defined trajectory (that is along direction 29) and towards a defined position (that is the one corresponding to the undeformed state of the arm 26).

It is therefore clear how the cable 12 does not risk any pinching and, hence, any damage during the coupling operations of the airbag module 6. Indeed, the cable 12 is forced to remain in a limited space, determined during design and essentially defined by the degree of flexibility and by the size of the arm 26.

Other advantages are then clear for a skilled person in the art on the basis of the other characteristics displayed above. In particular, the supporting member 1 is relatively compact. Moreover, the specific shape of the arm 26 shown in the annexed drawings is relatively simple to make and then to use during the assembly of the airbag module 6. Furthermore, the supporting member 1 is shaped so as to protect the cables 8 as much as possible, besides guiding the movements of cable 12 through the elastic deformation of the arm 26.

Finally, from the foregoing it comes clear that modifications and variations can be made to the supporting member 1 which are not beyond the protection field of this invention, as defined in the appended claims.

In particular, the shape of the arm 26, for example the number and the position of the looped portions 30, may be different from what has been shown as an example; and/or the walls 21 could be absent; and/or the attachment portions 14 could have different shapes from what has been shown, in general to adapt to electrical connectors of a different kind from the connectors 5.

Moreover, the supporting member 1 could be shaped so as to electrically connect the cabling 2 to the connector 53 before mounting the airbag module 6 over the hub 48, and to then exploit the flexibility of the arm 26 to connect the cabling 2 to the airbag module 6 during the fixing operations of the latter.

## Claims

1. A supporting member (1) to support cabling (2), which comprises:
- at least one cable (12);
- a first and a second connector (5,13) electrically connected to each other through said cable (12);
- an attachment portion (14) having the shape and size such as to be connected, in use, to said first connector (5) ;
- an arm (26) comprising a first and a second end portion (27,28) opposite to each other; said first end portion (27) being fixed with respect to said attachment portion (14); and
- retention means (35) to keep said cable (12) coupled to said arm (26);
**characterized in that** the arm is elastically flexible so as to enable a distancing of said second end portion (28) from said attachment portion (14).

2. The supporting member according to claim 1, **characterised in that** said arm (26) comprises at least one looped portion (30) that is elastically deformable.

3. The supporting member according to claim 2, **characterised in that** said retention means (35) comprise first retention means (36) carried by said looped portion (30) .

4. The supporting member according to claim 2 or 3, **characterised in that** said arm (26) comprises at least one rectilinear portion (32), which extends like a prolongation of said looped portion (30).

5. The supporting member according to claim 4, **characterised in that** said rectilinear portion (32) has a flat shape and is essentially orthogonal to a direction (29) along which said second end portion (28) moves when said arm (26) is elastically deformed.

6. The supporting member according to any one of the preceding claims, **characterised in that** said retention means (35) comprise second retention means (37) carried by said second end portion (28).

7. The supporting member according to any one of the preceding claims, **characterised in that** it comprises two attachment portions (14), arranged in mutually flanked positions and having such shapes and sizes as to support, in use, respective first connectors (5) of said cabling (2); and a supporting wall (23) arranged in an intermediate position between said attachment portions (14).

8. The supporting member according to claim 7, **characterised in that** said arm (26) extends overhanging from said supporting wall (23); and **in that** it comprises third retention means (38) carried by said supporting wall (23) to keep said cable (12) coupled to said supporting wall (23).

9. A vehicle steering wheel comprising:
- a structure (41) able to be held by a driver and comprising a hub (43), able to be coupled to a steering column (51) in coaxial and angularly fixed position;
- an airbag module (6) fixed or fixable to said hub (48);
- a cabling (2) comprising at least one cable (12), a first connector (5) and a second connector (13) electrically connected to said first connector (5) through said cable (12);
- a supporting member (1), according to any one of the preceding claims, and coupled to said cabling (2);
wherein said first connector (5) is electrically connected to said airbag module (6).

10. Assembly method to assemble a vehicle's steering wheel according to claim 9, **characterised in that** it comprises the steps of:
- arranging a driving switch device (52) around a steering column (51), said driving switch device (52) carrying at least one third connector (53);
- coupling said hub (48) to said steering column (51) in coaxial position and fixed angularly and over said driving switch device (52);
- bringing closer and electrically connect said second connector (13) to said third connector (53), elastically deforming said arm (26);
- bringing closer and fixing said airbag module (6) to said hub (48), after having connected said second and third connector (13,53).

## Patentansprüche

1. Tragelement (1) zum Tragen einer Verkabelung (2), welches umfasst:
- mindestens ein Kabel (12);
- einen ersten und einen zweiten Verbinder (5, 13), die durch das Kabel (12) elektrisch miteinander verbunden sind;
- einen Anbringungsabschnitt (14) mit einer derartigen Form und Größe, um im Gebrauch mit dem ersten Verbinder (5) verbunden zu sein;
- einen Arm (26), der einen ersten und einen zweiten Endabschnitt (27, 28) umfasst, die einander gegenüberliegen; wobei der erste Endabschnitt (27) in Bezug auf den Anbringungsabschnitt (14) befestigt ist; und
- Haltemittel (35), um das Kabel (12) mit dem Arm (26) gekoppelt zu halten;
**dadurch gekennzeichnet, dass** der Arm elastisch flexibel ist, um eine Beabstandung des zweiten Endabschnitts (28) von dem Anbringungsabschnitt (14) zu ermöglichen.

2. Tragelement nach Anspruch 1, **dadurch gekennzeichnet, dass** der Arm (26) mindestens einen geschlungenen Abschnitt (30) umfasst, der elastisch verformbar ist.

3. Tragelement nach Anspruch 2, **dadurch gekennzeichnet, dass** die Haltemittel (35) erste Haltemittel (36) umfassen, die durch den geschlungenen Abschnitt (30) getragen sind.

4. Tragelement nach Anspruch 2 oder 3, **dadurch gekennzeichnet, dass** der Arm (26) mindestens einen geradlinigen Abschnitt (32) umfasst, der sich wie eine Verlängerung des geschlungenen Abschnitts (30) erstreckt.

5. Tragelement nach Anspruch 4, **dadurch gekennzeichnet, dass** der geradlinige Abschnitt (32) eine flache Form aufweist und im Wesentlichen orthogonal zu einer Richtung (29) ist, entlang der sich der zweite Endabschnitt (28) bewegt, wenn der Arm (26) elastisch verformt wird.

6. Tragelement nach einem der vorhergehenden Ansprüche, **dadurch gekennzeichnet, dass** die Haltemittel (35) zweite Haltemittel (37) umfassen, die durch den zweiten Endabschnitt (28) getragen sind.

7. Tragelement nach einem der vorhergehenden Ansprüche, **dadurch gekennzeichnet, dass** es zwei Anbringungsabschnitte (14), die in zueinander flankierten Positionen angeordnet sind und derartige Formen und Größen aufweisen, um im Gebrauch jeweilige erste Verbinder (5) der Verkabelung (2) zu tragen; und eine Tragwand (23), die in einer Zwischenposition zwischen den Anbringungsabschnitten (14) angeordnet ist, umfasst.

8. Tragelement nach Anspruch 7, **dadurch gekennzeichnet, dass** sich der Arm (26) von der Tragwand (23) überhängend erstreckt; und darin, dass es dritte Haltemittel (38) umfasst, die durch die Tragwand (23) getragen sind, um das Kabel (12) mit der Tragwand (23) gekoppelt zu halten.

9. Fahrzeuglenkrad, umfassend:
- eine Struktur (41), die durch einen Fahrer gehalten werden kann und eine Nabe (43) umfasst, die mit einer Lenksäule (51) in einer koaxialen und winkelmäßig festen Position gekoppelt werden kann;
- ein Airbag-Modul (6), das an der Nabe (48) befestigt oder befestigbar ist;
- eine Verkabelung (2), die mindestens ein Kabel (12), einen ersten Verbinder (5) und einen zweiten Verbinder (13), der durch das Kabel (12) mit dem ersten Verbinder (5) elektrisch verbunden ist, umfasst;
- ein Tragelement (1) nach einem der vorhergehenden Ansprüche, und das mit der Verkabelung (2) gekoppelt ist;
wobei der erste Verbinder (5) mit dem Airbag-Modul (6) elektrisch verbunden ist.

10. Montageverfahren zum Montieren eines Lenkrads eines Fahrzeugs nach Anspruch 9, **dadurch gekennzeichnet, dass** es die Schritte umfasst zum:
- Anordnen einer Fahrschaltvorrichtung (52) um eine Lenksäule (51), wobei die Fahrschaltvorrichtung (52) mindestens einen dritten Verbinder (53) trägt;
- Koppeln der Nabe (48) mit der Lenksäule (51) in koaxialer Position und winkelmäßig fest sowie über der Fahrschaltvorrichtung (52);
- Annähern und elektrischen Verbinden des zweiten Verbinders (13) mit dem dritten Verbinder (53), wobei der Arm (26) elastisch verformt wird;
- Annähern und Befestigen des Airbag-Moduls (6) an der Nabe (48), nachdem der zweite und der dritte Verbinder (13, 53) verbunden wurden.

## Revendications

1. Élément de support (1) pour supporter un câblage (2), qui comprend :
- au moins un câble (12) ;
- un premier et un deuxième connecteur (5, 13) connectés électriquement l'un à l'autre par le biais dudit câble (12) ;
- une partie de fixation (14) ayant la forme et la taille de sorte à être connectée, dans son utilisation, audit premier connecteur (5) ;
- un bras (26) comprenant une première et une seconde partie d'extrémité (27, 28) opposées l'une à l'autre ; ladite première partie d'extrémité (27) étant fixe par rapport à ladite partie de fixation (14) ; et
- des moyens de retenue (35) pour garder ledit câble (12) couplé audit bras (26) ;
**caractérisé en ce que** le bras est flexible élastiquement de manière à permettre la création d'une distance de ladite seconde partie d'extrémité (28) par rapport à ladite partie de fixation (14).

2. Élément de support selon la revendication 1, **caractérisé en ce que** ledit bras (26) comprend au moins une partie en boucle (30) qui est déformable élastiquement.

3. Élément de support selon la revendication 2, **caractérisé en ce que** lesdits moyens de retenue (35) comprennent des premiers moyens de retenue (36) portés par ladite partie en boucle (30).

4. Élément de support selon la revendication 2 ou 3, **caractérisé en ce que** ledit bras (26) comprend au moins une partie rectiligne (32), qui s'étend comme un prolongement de ladite partie en boucle (30).

5. Élément de support selon la revendication 4, **caractérisé en ce que** ladite partie rectiligne (32) a une forme plate et est essentiellement orthogonale à une direction (29) le long de laquelle ladite seconde partie d'extrémité (28) se déplace lorsque ledit bras (26) est déformé élastiquement.

6. Élément de support selon l'une quelconque des revendications précédentes, **caractérisé en ce que** lesdits moyens de retenue (35) comprennent des deuxièmes moyens de retenue (37) portés par ladite seconde partie d'extrémité (28).

7. Élément de support selon l'une quelconque des revendications précédentes, **caractérisé en ce qu'**il comprend deux parties de fixation (14), agencées dans des positions mutuellement flanquées et ayant des formes et des tailles telles qu'elles supportent, dans leur utilisation, des premiers connecteurs (5) respectifs dudit câblage (2) ; et une paroi de support (23) agencée dans une position intermédiaire entre lesdites parties de fixation (14).

8. Élément de support selon la revendication 7, **caractérisé en ce que** ledit bras (26) s'étend en surplomb à partir de ladite paroi de support (23) ; et **en ce qu'**il comprend des troisièmes moyens de retenue (38) portés par ladite paroi de support (23) pour garder ledit câble (12) couplé à ladite paroi de support (23).

9. Volant de direction de véhicule comprenant :
- une structure (41) capable d'être tenue par un conducteur et comprenant un moyeu (43), capable d'être couplé à une colonne de direction (51) dans une position coaxiale et fixe angulairement ;
- un module de coussin de sécurité gonflable (6) fixé ou fixable audit moyeu (48) ;
- un câblage (2) comprenant au moins un câble (12), un premier connecteur (5) et un deuxième connecteur (13) connecté électriquement audit premier connecteur (5) par le biais dudit câble (12) ;
- un élément de support (1), selon l'une quelconque des revendications précédentes, et couplé audit câblage (2) ;
dans lequel ledit premier connecteur (5) est connecté électriquement audit module de coussin de sécurité gonflable (6).

10. Méthode d'assemblage pour assembler un volant de direction d'un véhicule selon la revendication 9, **caractérisée en ce qu'**elle comprend les étapes consistant à :
- agencer un dispositif commutateur de direction (52) autour d'une colonne de direction (51), ledit dispositif commutateur de direction (52) portant au moins un troisième connecteur (53) ;
- coupler ledit moyeu (48) à ladite colonne de direction (51) dans une position coaxiale et fixe angulairement et par-dessus ledit dispositif commutateur de direction (52) ;
- rapprocher et connecter électriquement ledit deuxième connecteur (13) dudit/audit troisième connecteur (53), déformant élastiquement ledit bras (26) ;
- rapprocher et fixer ledit module de coussin de sécurité gonflable (6) dudit/audit moyeu (48), après avoir connecté ledit deuxième et ledit troisième connecteur (13, 53).
